**Europäisches Patentamt**

**European Patent Office**

**Office européen des brevets**

(19)

(11) Veröffentlichungsnummer: **0 208 280**
**A2**

# (12) EUROPÄISCHE PATENTANMELDUNG

(21) Anmeldenummer: 86109180.9

(22) Anmeldetag: 04.07.86

(51) Int. Cl.⁴: **G11B 5/55** , G11B 21/08

(30) Priorität: 10.07.85 DE 8519878 U

(43) Veröffentlichungstag der Anmeldung:
**14.01.87 Patentblatt 87/03**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Manzke, Klaus**
**Schulstrasse 10**
**D-6721 Westheim(DE)**
Erfinder: **Hammerschmitt, Peter**
**Elsterweg 1**
**D-6835 Bruehl(DE)**
Erfinder: **Weis, Hans-Joachim**
**Ritterstrasse 38**
**D-6700 Ludwigshafen(DE)**

(54) Vorrichtung zum Positionieren von Gegenständen geringer Masse, insbesondere Magnetköpfe, in bezug auf einen zweiten Gegenstand und Magnetplattenspeicher mit einer solchen Vorrichtung.

(57) Die Erfindung betrifft eine Positioniervorrichtung insbesondere für Magnetköpfe in bezug auf mindestens einen Magnetaufzeichnungsträger, wobei der Kopfarm mit dem Kopfturm einstückig ausgebildet und mit Aufnahmeeinrichtungen für mindestens einen Magnetkopf auf einem Federtragteil, insbesondere für jeweils ein vormontiertes Magnetkopfpaar versehen ist und wobei ein Auswechseln beliebiger Köpfe/Kopfpaare erreicht wird. Die Vorrichtung ist für Magnetspeichersysteme, Fertigungsvorrichtungen usw. einsetzbar.

FIG. 2B

EP 0 208 280 A2

## Vorrichtung zum Positionieren von Gegenständen geringer Masse insbesondere Magnetköpfe, in bezug auf einen zweiten Gegenstand und Magnetplattenspeicher mit einer solchen Vorrichtung

Die Erfindung betrifft eine Vorrichtung zum Positionieren von Gegenständen geringer Masse in bezug auf mindestens einen zweiten Gegenstand, wobei wenigstens ein um eine Achse und relativ zum zweiten Körper schwenkbarer Schwenkarm für mindestens einen Gegenstand und eine Schwenkarmantriebseinrichtung vorgesehen sind, wobei der Schwenkarm zwischen der Schwenkachse und dem zumindest einen zu positionierenden Gegenstand aus im wesentlichen einem einzigen Armteil besteht und wobei der einzige Armteil am freien Ende Aufnahmeeinrichtungen für mindestens einen Gegenstand aufweist, der an einem Ende einer Tragfeder vorgesehen ist, und diese Tragfeder am anderen Ende eine Flanschplatte trägt. Die Erfindung betrifft auch einen Magnetplattenspeicher mit einer solchen Vorrichtung.

Mit dem DE-GM G 8 315 140 ist eine derartige Vorrichtung für Magnetköpfe bekannt, bei der die Magnetköpfe an einem Kopfturm über auswechselbare Kopfträger befestigt sind und der gesamte Kopfturm mittels Schrauben am im wesentlichen einzigen Armteil des Schwenkarms befestigbar, davon lösbar und dadurch austauschbar ist. Die Kopfträger dieser bekannten Köpfe bestehen aus einer Tragfeder, die einerseits den Kopf und andererseits eine Flanschplatte trägt, wobei besagte Flanschplatte nur indirekt über ein spezielles Befestigungsteil am Kopfturm befestigt ist.

Mit dem DE-GM 8 215 555 sind Magnetköpfe auf Tragfedern bekannt, die über Flanschplatten an separaten Kopfarmteilen befestigt sind, wobei letztere zusammengefügt den Kopfturm bilden. Ein Einzelbefestigen oder -lösen jedes Kopfes ist bei dieser Bauweise nicht möglich, da die durch die Montagefolge vorgegebene Reihenanordnung der Köpfe dieses verhindert.

Aus der US-PS Des 251 559 ist ein separater Kopfturm bekannt, der zwischen Kopfträgerhälften eingeklemmt und mittels besonderer Befestigungselemente befestigt ist. Obwohl die Köpfe durch Einstecken in Öffnungen im Kopfturm befestigbar und lösbar sind, sind besondere, den Öffnungen in der Form angepaßte Befestigungselemente notwendig und Befestigen und Lösen ist aufbaubedingt lediglich seriell möglich.

Bei obigen bekannten Kopfträger-Ausführungen wird durch zusätzliche Befestigungselemente eine Vergrößerung der Masse und dadurch ein ungünstiges Massenträgheitsmoment erhalten.

Gemäß der EP-PS 87 300 ist ein Kopfträgerarm mit integriertem Kopfturm bekannt, wobei eine Rechtecköffnung mit seitlichen Treppenabschnitten (mäanderförmige Begrenzung der Längsseiten der Öffnungen) zur Aufnahme der einzelnen Köpfe dient. Dabei ist für jeden Kopf ein Zusatzbefestigungselement zum Einstellen der Kopfposition, und es sind Schraubenverbindungen zum rüttelsicheren Befestigen erforderlich.

Es ist Aufgabe der Erfindung, die Herstellung, den Zusammenbau und die Funktion der Positionier-Vorrichtung der eingangs definierten Art zu verbessern, beziehungsweise einen Magnetplattenspeicher mit einer solchen Vorrichtung bereitzustellen.

Die Erfindung löst diese Aufgabe gemäß Anspruch 1.

Vorteilhaft ist bei der erfindungsgemäßen Ausführung besonders die einfache Herstellmöglichkeit des Kopfarms ohne getrennten Kopfturm, die in einer besonders günstigen Positioniergeschwindigkeits-Schwingungsfrequenz resultiert.

In weiterer Ausführung zum Positionieren von mindestens zwei Gegenständen sind deren Flanschplatten über Schrauben im Abstand miteinander verbunden, wobei Abstand und Breite der Aufnahmeschlitze dem Abstand und Durchmesser der Schrauben entsprechen zur gemeinsamen Befestigung der zwei Gegenstände. Damit wird eine einfache und sichere Ausrichtung und Befestigung eines Gegenstandspaares erreicht. In praktischer Ausbildung sind die Aufnahmeschlitze zweckmäßig axial übereinander angeordnet. Dadurch ist eine Montage auch durch die Schlitze hindurchgreifend möglich.

In weiterer günstiger Ausgestaltung sind zur Abstandseinstellung von zwei axial übereinander angeordneten Gegenständen elastisch verformbare Hülsen über den Schrauben vorgesehen. Dadurch wird einerseits ein vorgebbarer Abstand der Gegenstände vor dem Einbau und andererseits ein definitiv vorgebbarer Mindestabstand mit Federwirkung nach dem Einbau erreichbar, was sehr vorteilhaft hinsichtlich möglicher Beschädigungen und der einfachen Ein-und Ausbaubarkeit ist.

Praktisch können diese Hülsen aus Kunststoff, insbesondere aus Polyamid z.B. einem Utramid[R], bestehen, wodurch sie preiswert herstellbar sind. Zweckmäßig kann statt der Schraubenmuttern eine gemeinsame Gewindeplatte das Gegenstück zu den Befestigungsschrauben bilden, wodurch wiederum eine Ersparnis bei Herstellung und Zusammenbau erreichbar ist.

[R] Eingetragenes Warenzeichen der BASF Aktiengesellschaft, Ludwigshaven Sehr vorteilhaft und zweckmäßig ist die Verwendung der Positioniervorrichtung in Verbindung mit in bezug auf Spuren von Magnetplatten in einem Plattenspeicher zu positionieren mindestens einem Magnetkopf, wobei wenigstens ein um eine zur Magnetplattenachse parallele Achse und relativ zur Magnetplatte schwenkbarer Schwenkarm für den Magnetkopf und eine Schwenkarmantriebseinrichtung vorgesehen sind. Vorzugsweise sind die Magnetköpfe als Einheiten paarweise übereinander miteinander verbunden ausgebildet und so montierbar.

Einzelheiten der Vorrichtung sind den im folgenden beschriebenen und in den Zeichnungen dargestellten Ausführungsbeispielen zu entnehmen.

Die Zeichnungen zeigen in

Figuren 1a und 1b ein axial übereinander als montierbare Einheit verbundenes Magnetkopfpaar in Seitenansicht und Draufsicht,

Figuren 2a bis 2c eine Kopfturm-und Schwenkarmeinheit mit Magnetköpfen in Seitenansicht, Draufsicht und Detailansicht,

Figur 3 ein Diagramm der Kopfarmpositioniergeschwindigkeit über der Frequenz.

Ein Schwenkarmpositionierer in einem Magnetplattenspeicher umfaßt einen Schwenkarm 8, der im wesentlichen aus einem einzigen Armteil 9 besteht, der jedoch außerdem einen darin integrierten Kopfturm 10 mitumfaßt, der auch einstückig damit herstellbar ist. Armteil 9 und Kopfturm 10 sind beispielsweise im Leichtmetalldruckguß, z.B. aus Magnesium oder Magnesiumlegierung, wirtschaftlich und in großen Stückzahlen herstellbar. Der Schwenkarmpositionierer enthält außerdem eine Antriebseinrichtung 11, hier als Rotor 12 mit Dauermagnetplättchen 13 am Umfang versehen. Der Rotor 12 ist der direkt um die Schwenkachse 14 bewegte Teil des Schwenkarms 8, an dem der Armteil 9 mittels Schrauben 15 starr befestigt ist. Der Stator der Antriebseinrichtung ist nicht dargestellt, er ist jedoch einfach als halbkreisförmiger Körper mit flachen Spulen am Innenumfang ausbildbar. Die gesamte bewegte Einheit (8, 9, 10) ist um die Achse 14 in einem vorgegebenen Winkelbereich schwenkbar. Der Kopfturm 10 trägt Magnetkopf-Einheiten 7, die durch die Schwenkbewegung der Schwenkeinheit über die Oberfläche von Magnetplatten 6 bewegbar und auf nicht sichtbare Magnetspuren positionierbar sind. Die Magnetplatten 6 sind um ihre Mittelachse 5 drehangetrieben zur Aufzeichnung/Wiedergabe von Signalen. Zur Befestigung der Kopfeinheiten 7 ist der Kopfturm 10 am vorderen freien Ende mit Aufnahmeeinrichtungen 16 ausgebildet, die mit Aufnahmeschlitzen 17 zur Aufnahme von Befestigungsschrauben 18 versehen sind. Die Schlitze liegen wie dargestellt beispielsweise paarweise nebeneinander, so daß sich bei vielen Kopfeinheiten 7 eine kammartige Aufnahmeeinrichtung 16 ergibt.

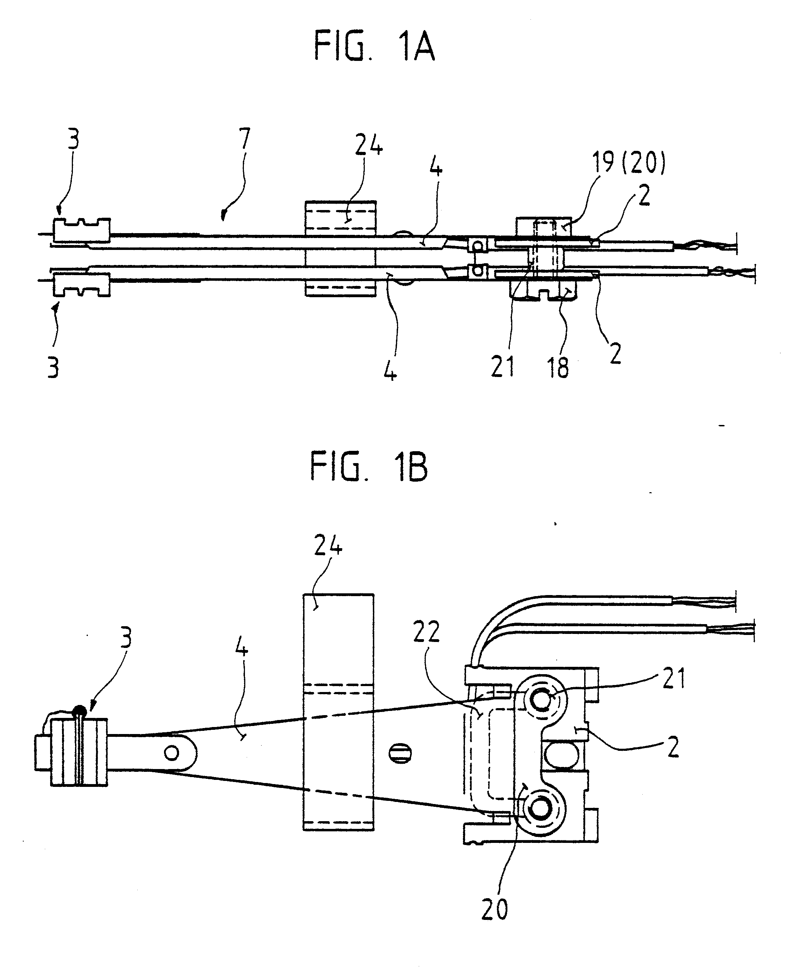

Figur 1 zeigt ein miteinander über Schrauben 18, einzelne Muttern 19 oder eine gemeinsame Gewindeplatte 20 verbundene einzelne Magnetköpfe 3, die jeder auf einer Tragfeder 4 angebracht sind, die am anderen Ende eine Flanschplatte 2 trägt. Zwischen den übereinanderliegenden Flanschplatten 2 ist über den Schrauben 18 jeweils ein Abstandselement, hier als Hülse 21 ausgebildet, vorgesehen. Die Hülse 21 besteht zweckmäßig aus vorzugsweise elastisch verformbarem Kunststoffmaterial und günstig können zwei Hülsen 21 paarweise hergestellt und miteinander, z.B. über einen Steg 22, verbunden ausgeführt sein. Der Steg 22 hält die Hülsen 21 derartig in einem Abstand, daß sie in die Montageschlitze 17 des Kopfturms passen.

Die Tragfedern 4 der Kopfeinheit 7 können vor Montage zweckmäßig durch einen Haltebügel 24 gesichert werden, der zur Montage lösbar ist (s. Figuren 1A und 1B).

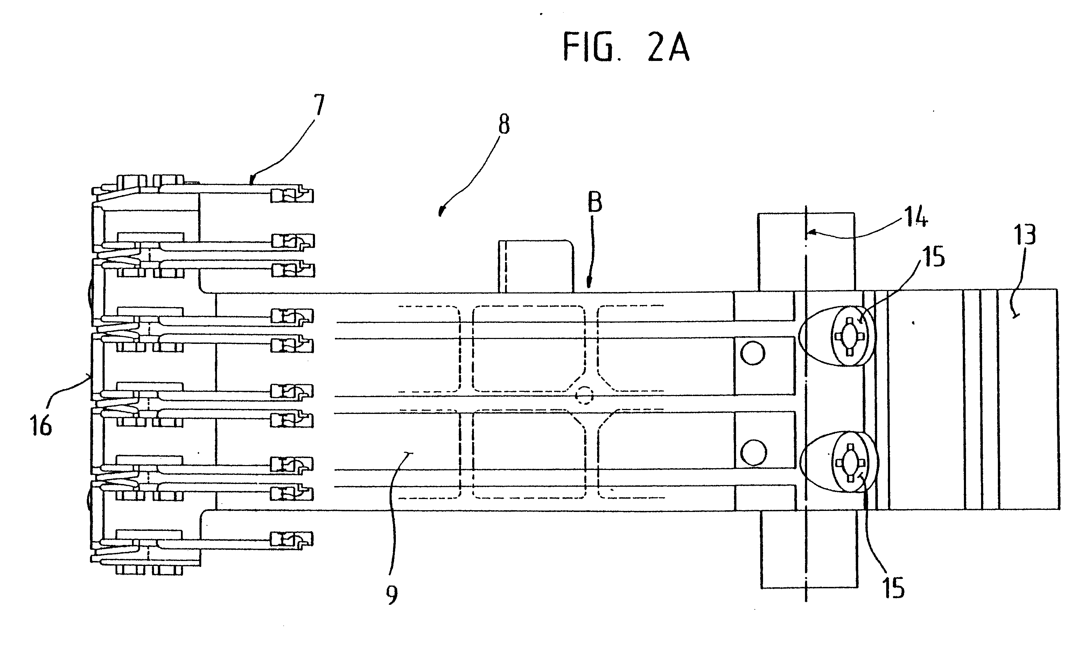

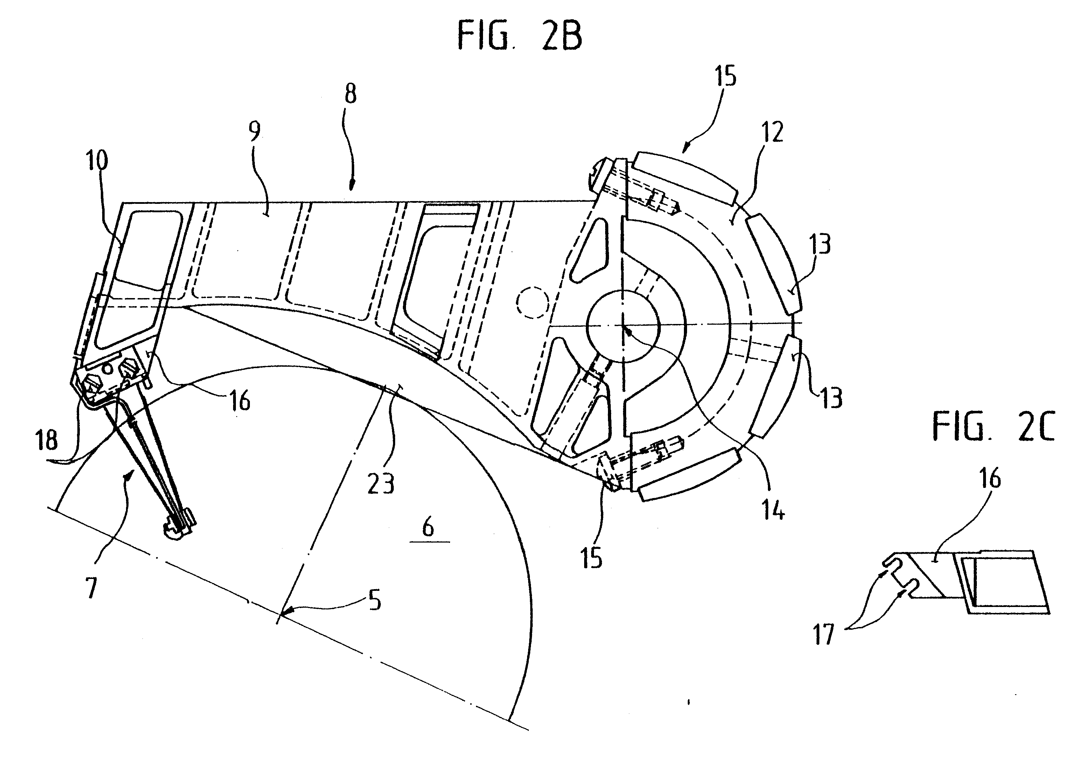

Die Einzelmagnetköpfe 3 mit Tragfeder 4 und Flanschplatte 2 sind handelsübliche, sogenannte Winchester-Magnetköpfe für Festplattensysteme. Die Kopfeinheit 7 ist somit eine bereits erfindungsgemäß vormontierte Einheit, die lediglich durch Festdrehen der Schrauben 18 in den Montageschlitzen 17 des Kopfturms einfach montierbar ist. Beim Festziehen verformen sich die Abstandselemente 21 solange in ihrer Höhe, bis die Flanschplatten 2 der Kopfeinheit 7 auf die Montageflächen des Kopfturms, genauer der Ober-und Unterseiten der Kammelemente 16 mit den Montageschlitzen 17 gepreßt werden. Im Endstadium wird eine kraftschlüssige Verbindung zwischen Kopfeinheit 7 und Schwenkarm 8 hergestellt. Figur 2 zeigt ein Ausführungsbeispiel, in dem so Magnetkopf-Einheiten 7 mit dem Schwenkarm 8 verbunden sind. Die Montage der Kopfeinheiten erfolgt zweckmäßig, wenn eine Anordnung der Montageschlitze 17 achsial übereinander gewählt ist, von oben durch die noch freien Schlitze hindurch, wobei zuerst die untersten Kopfeinheiten 7 montiert werden. Die Art der Kammelemente 16 mit Schlitzen 17 ermöglicht es, vorteilhafterweise beliebige Kopf-Einheiten 7 oder Einzelköpfe zu demontieren, wenn die seitlich zugänglichen Schrauben 18 gelöst werden und anschließend das Kopfpaar 7 aus den Schlitzen 17 herausziehbar ist. Eine solche Zugänglichkeit der einzelnen Köfpe oder Kopfpaare ist sowohl zwecks Auswechselns defekter Elemente als auch zwecks Änderung der Kopftypen erforderlich und vorteilhaft. Die einfache Kopfmontage/-demontage ist die Voraussetzung für eine feste, d.h. unlösbare Verbindung zwischen Schwenkarm 8 und Kopfturm 10. Diese Verbindung kann außer durch oben erwähnte, einstückige Herstellung auch durch Verschweißen oder Verlöten realisiert werden. Nach Herstellen der Verbindung müssen Schwenkarm 8 und Kopfturm 10 jedenfalls als einstückiger Körper reagieren, was besonders für das Schwingungsverhalten der Einheit beim Positionieren wichtig ist. Die gesamte bewegte Kopfarmeinheit soll eine sehr verwindungssteife, - schwingungsunempfindliche Einheit von möglichst geringer Masse darstellen und sollte daher größtenteils z.B. aus Magnesiumdruckguß bestehen.

Als Ergebnis der erfindungsgemäßen Ausbildung der Positioniervorrichtung wird ein vorzügliches Biegemoment und ein hervorragendes Schwingungsverhalten eines erfindungsgemäßen Positioniersystems für einen 5 Zoll-Festplattenspeicher mit einer Spurzahl pro Seite von ca. 1000 Spuren angesehen, dessen außerordentlich vorteilhafte Schwingungskennlinie weiter unten noch erläutert werden soll.

Wie in Figuren 2a und 2b erkennbar, besteht der Armteil 9 mit Kopfturm 10 aus einer Rippenkonstruktion mit mindestens einer Längsrippe und Querrippen sowie einem Rand 23. Wie in Figur 2a sichtbar, sind die Rippen nach oben und unten abgedeckt und durch eine Mittelwandung wird eine Ausbildung mit kastenförmigen Hohlräumen erhalten, die fertigungsmäßig günstig ist, da im Druckguß oder Spritzguß, z.B. aus Magesium, eine wirtschaftliche Herstellung erzielbar ist. Zweckmäßig wird der Armteil 9 mit dem Kopfturm 10 einstückig hergestellt, um die unten erläuterten Steifigkeitswerte und Schwingungswerte, auch in bezug auf Biegung bei möglichst geringer Masse zu erhalten.

Die Rippenkonstruktion soll in jedem Fall so ausgelegt werden, daß die Mindest-Biegemomente erreicht oder besser überschritten werden. Dafür ist jede Bauweise, z.B. in Wabenform oder auch in Formen aus der Fachwerkbautechnik, geeignet.

Es wurde gefunden, daß das Mindest-Biegemoment des Schwenkarms 8 (in Richtung des Pfeils B in Figur 2a), genauer der Armteil 9 und der Kopfturm 10, bei einseitiger Einspannung an der Quermittelachse 14, die durch die Welle verläuft, bei einer Armdurchbiegung (Federweg) F = 14 $\mu$m am vorderen freien Armende $M_b$ = 0,15 Nm betragen sollte, um bei Aufzeichnungsdichten von 400 Spuren/cm und mehr ausreichend schnell und zuverlässig positionieren zu können. Die Durchbiegungen wurden mit einer Mikrometer-Meßuhr der Fa. Tesa, Schweiz, vom Typ "Tesatast" mit einer Ablesegenauigkeit von 0,5 $\mu$m gemessen.

Der in den Zeichnungen dargestellte und hier beschriebene schematische Schwenkarm 8 besitzt ein Biegemoment $M_b$ = 0,66 Nm und kann je nach Dicke der Anzahl und Anordnung der Rippen Werte von Mb etwa im Bereich zwischen 0,3 Nm und 0,8 Nm aufweisen. Spurdichten von ca. 400 Spuren/cm und höhere sind damit ohne weiteres erreichbar, wobei durch die hohen mechanischen Steifigkeits- und Stabilitätswerte die elektronischen Regeleinrichtungen, z.B. Servoeinrichtungen, nicht sehr aufwendig sein müssen, um hohe Positioniergenauigkeit und -zuverlässigkeit bei hoher Positioniergeschwindigkeit erzielbar zu machen.

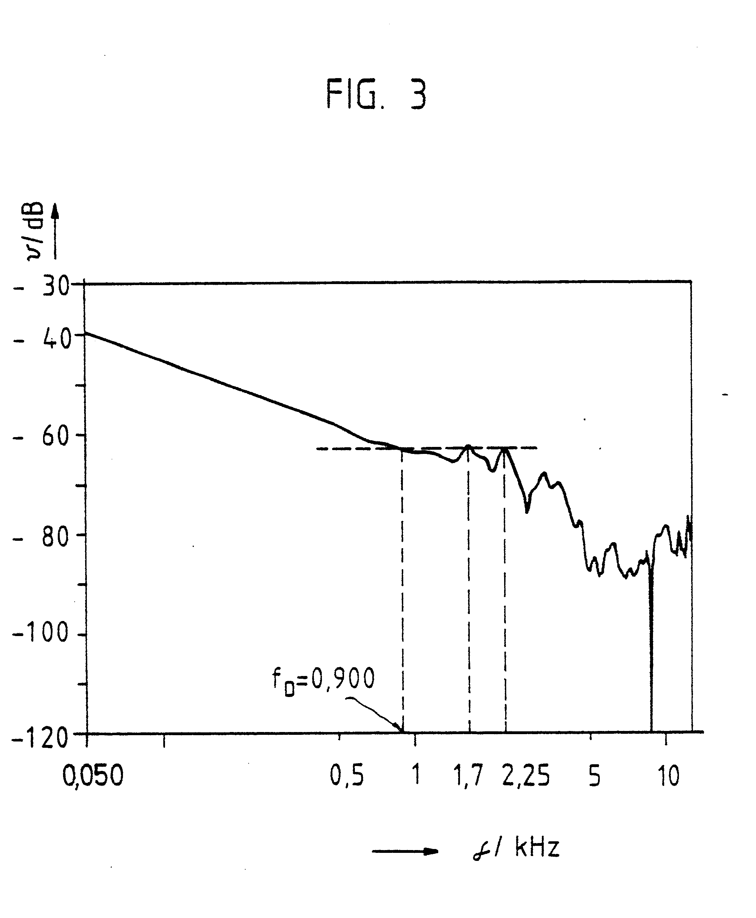

Ein Meßdiagramm der Kopfarm-Positioniergeschwindigkeit v über der Schwingungsfrequenz f ist in Figur 3 dargestellt. Es zeigt eine Kurve in logarithmischem Maßstab mit einem sehr linearen Abfall bis ca. 1,5 kHz bis zu den eindeutig ausgeprägten Eigenresonanzstellen, die etwa bei $f_R$ = 1,7 kHz und 2,25 kHz. gemessen wurden. Bei der Frequenz f = 50 Hz beträgt die Positioniergeschwindigkeit v etwa -40 dB. Die Durchtrittsfrequenz $f_D$ , die durch eine Horizontale an den höchsten Resonanzstellenamplituden und deren Schnittpunkt mit der Kurve bestimmt ist, liegt im praktischen Beispiel des oben beschriebenen Festplattenspeichers bei 0,9 kHz. Damit ist das mechanische Schwingverhalten des Positioniersystems derartig gut, daß die elektronischen Regeleinrichtungen, z.B. Servoeinrichtungen, nicht sehr aufwendig sein müssen, d.h., daß keine Kerbfilter usw. benutzt werden müssen, um eine ausreichende Positionierungsschnelligkeit, -genauigkeit und -zuverlässigkeit zu erreichen.

Die Positioniervorrichtung und ein Magnetplattenspeicher-Laufwerk wurden schematisch oben beschrieben. Selbstverständlich ist die Verwendung einer solchen Positioniervorrichtung nicht auf diese Anwendung beschränkt. Es ist z.B. denkbar, daß wegen ihrer hohen Steifigkeit, ggf. auch wegen der günstigen Masseverteilung und des ausgezeichneten mechanischen Schwingverhaltens die Vorrichtung für Schallplattenspieler usw., Videoplattenspieler (magnetisch, optisch oder elektrisch) sowie auch für industrielle Roboter eingesetzt wird.

**Ansprüche**

1. Vorrichtung zum Positionieren von Gegenständen geringer Masse in bezug auf mindestens einen zweiten Gegenstand, wobei wenigstens ein um eine Achse und relativ zum zweiten Körper (6) schwenkbarer Schwenkarm (8) für mindestens einen Gegenstand (3) und eine Schwenkarmantriebseinrichtung (15) vorgesehen sind, wobei der Schwenkarm (8) zwischen der Schwenkachse (14) und dem zumindest einen zu positionierenden Gegenstand (3) aus im wesentlichen einem einzigen Armteil (9) besteht und wobei der einzige Armteil - (9) am freien Ende Aufnahmeeinrichtungen für mindestens einen Gegenstand (3) aufweist, der an einem Ende einer Tragfeder (4) vorgesehen ist, und diese Tragfeder (4) am anderen Ende eine Flanschplatte (2) trägt, dadurch gekennzeichnet, daß die Aufnahmeeinrichtungen (16) einstückig mit dem einzigen Armteil (9) ausgebildet sind und Aufnahmeschlitze (17) zur Befestigung des mindestens einen Gegenstands (3) über dessen Flanschplatte (2) vorgesehen sind.

2. Vorrichtung nach Anspruch 1, zum Positionieren von mindestens zwei Gegenständen, dadurch gekennzeichnet, daß die Flanschplatten (2) der zwei Gegenstände (3) über Schrauben (18) im Abstand miteinander verbunden sind, wobei Breite der Aufnahmeschlitze (17) dem Abstand und Durchmesser der Schrauben (18) entsprechen, zur gemeinsamen Befestigung der zwei Gegenstände (3).

3. Vorrichtung nach Anspruch 1, dadurch gekennzeichnet, daß die ersten Gegenstände aus mindestens einem Magnetkopf (3) bestehen, der auf ausgewählte Spuren von mindestens einer mit einem Antrieb kuppelbaren Magnetplatte (6), als zweitem Gegenstand in einem Magnetplattenspeicher ausgerichtet wird, wobei wenigstens ein um eine zur Magnetplattenachse (5) parallele Achse (14) und relativ zur Magnetplatte schwenkbarer Schwenkarm (8) für den mindestens einen Magnetkopf (3) und eine Schwenkarmantriebseinrichtung (15) vorgesehen sind.

4. Vorrichtung nach den Ansprüchen 1 und 3, dadurch gekennzeichnet, daß die Aufnahmeschlitze (17) axial übereinander angeordnet sind.

5. Vorrichtung nach Anspruch 2 bzw. 3, dadurch gekennzeichnet, daß zur Abstandseinstellung zweier axial übereinander angeordneter Gegenstände (3) bzw. Magnetköpfe elastisch verformbare Hülsen (21) über den Schrauben (18) vorgesehen sind.

6. Vorrichtung nach Anspruch 5, dadurch gekennzeichnet, daß diese Hülsen (21) aus Kunststoff, insbesondere aus Polyamid, bestehen.

7. Vorrichtung nach den Ansprüchen 2 bis 5, dadurch gekennzeichnet, daß statt Schraubenmuttern eine gemeinsame Gewindeplatte (22) das Gegenstück zu den Befestigungsschrauben (18) bildet.

8. Vorrichtung nach den Ansprüchen 3 und 5, dadurch gekennzeichnet, daß die Magnetköpfe als Einheiten (7) paarweise übereinander miteinander verbunden montierbar sind.

9. Magnetplattenspeicher mit mindestens einer Magnetspeicherplatte mit einer Vorrichtung zum Positionieren von Magnetköpfen in bezug auf die Spuren der mit einem Antrieb kuppelbaren Magnetplatte, wobei wenigstens ein um eine Achse und relativ zur Magnetspeicherplatte schwenkbarer Schwenkarm (8) für mindestens die Magnetköpfe (3) und eine Schwenkarmantriebseinrichtung (15) vorgesehen sind, wobei der Schwenkarm (8) zwischen der Schwenkachse (14) und den Magnetköpfen (3) aus im wesentlichen einem einzigen Armteil (9) besteht und wobei der einzige Armteil (9) am freien Ende Aufnahmeeinrichtungen für die Magnetköpfe (3) aufweist, die jeder an einem Ende einer Tragfeder (4) vorgesehen sind, und diese Tragfeder (4) am anderen Ende eine Flanschplatte (2) trägt, dadurch gekennzeichnet, daß die Aufnahmeeinrichtungen (16) einstückig mit dem einzigen Armteil (9) ausgebildet sind und eine Mehrzahl axial übereinander angeordnete Aufnahmeschlitze (17) zur Befestigung der Magnetplatten (3) über der Flanschplatte (2) vorgesehen sind.

10. Magnetplattenspeicher nach Anspruch 9, dadurch gekennzeichnet, daß die Flanschplatten (2) zweier Magnetköpfe (3) über Schrauben (18) im Abstand miteinander verbunden sind, wobei Breite der Aufnahmeschlitze (17) dem Abstand und Durchmesser der Schrauben (18) entsprechen, zur gemeinsamen Befestigung der zwei Magnetköpfe (3).

11. Magnetplattenspeicher nach Anspruch 10, dadurch gekennzeichnet, daß zwischen zwei axial übereinander angeordneten Magnetköpfen (3) elastisch verformbare Kunststoffhülsen (21) über den Schrauben (18) vorgesehen sind.

# FIG. 1A

# FIG. 1B

# FIG. 2A

0 208 280

# FIG. 2B

# FIG. 2C

0 208 280

# FIG. 3